# EUROPEAN PATENT SPECIFICATION

(11) **EP 3 267 786 B1**
(45) Date of publication and mention of the grant of the patent: **08.07.2020**
(21) Application number: 16720924.6
(22) Date of filing: 09.03.2016
(51) Int. Cl.: A01K 1/00, B01D 47/02

(54) **FILTER INSTALLATION FOR FILTERING A GAS SUCH AS AIR, ANIMAL ACCOMMODATION PROVIDED THEREWITH AND CORRESPONDING METHOD**
LUFTFILTEREINRICHTUNG ZUM FILTERN EINES GASES WIE LUFT, STALL DAMIT VORGESEHEN, UND ENTSPRECHENDES VERFAHREN
INSTALLATION DE FILTRATION POUR FILTRER UN GAZ TEL QUE L'AIR, ÉTABLE POURVUE D'UNE TELLE INSTALLATION ET MÉTHODE CORRESPONDANTE

(30) Priority: 09.03.2015 NL 2014424
(43) Date of publication of application: 17.01.2018
(73) Proprietor: Blue Economy Systems B.V., 6860 AD Osterbeek (NL)
(72) Inventor: HAZELEGER, Pascal Willem Richard, 6814 DG Arnhem (NL); VAN HEUVEN, Klaas, 7475 TA Markelo (NL); VAN GENNIP, Wilhelmus Nicolaas Pieter Blasius, 5611 LA Eindhoven (NL); DE ZWARTE, Iman Jacob, 9723 DS Groningen (NL); GERITS, Johannes Henricus Pierre, 6874 AD Wolfheze (NL)
(74) Representative: Verdijck, Gerardus
(86) International application number: PCT/NL2016/050165
(87) International publication number: WO 2016/144172

(56) References cited:
- WO-A1-2008/019686
- WO-A1-2012/166000
- DE-U1-202010 000 009
- DE-U1-202014 104 576
- US-A- 6 132 493

## Description

The invention relates to a filter installation for filtering a gas, such as air. The invention relates particularly to a filter installation for removing dust, such as fine dust, from air. The invention can for instance be applied in an animal accommodation. Animal accommodations for livestock farming have to be ventilated. Due to the presence of livestock in an animal accommodation the air in the accommodation becomes humid and ammonia vapours are created. It is therefore important for animal welfare that the animal accommodation is ventilated. The exhaust air however has an environmental impact. This is why it is necessary to filter the emission of animal accommodations. The invention therefore relates particularly to an animal accommodation with a filter installation for removing dust from animal accommodation air.

US 6 132 493 A discloses an air washer.

DE 20 2014 1045 76 U1 discloses a filter system for an animal accommodation.

WO 2008/019686 A1 discloses a wet type air cleaner to clean and condition air.

WO 2012/166000 A1 discloses an air-cleaning installation to remove pollutants from the air in ventilation systems of stock-breeding premises.

In conventional filter systems for animal accommodations there is an emphasis on the removal of ammonia from the animal accommodation air. An example of a conventional system is an air washer in which air for cleaning is guided through a water mist which is for instance created by means of sprayers. Such conventional systems are however insufficiently effective for removing fine dust. Certainly in view of the fact that the government has set limits to the quantity of fine dust which may be emitted, there is therefore a need for animal accommodations with filter installations which can remove dust from the animal accommodation air in effective manner.

An object of the invention is to provide a filter installation for improved removal of dust from a gas, particularly air. It is a particular object of the invention to provide an animal accommodation provided with such a filter installation for improved removal of dust from animal accommodation air.

This object is achieved with the filter installation according to claim 1.

The invention relates further to an animal accommodation according to claim 10 provided with such a filter installation for removing dust from animal accommodation air.

Where the air for filtering is in conventional air systems guided through a water mist, the invention proposes guiding the gas through a water mass. The container is for this purpose at least partially filled with water during use. Practical tests have shown that guiding contaminated air through a water mass achieves an increased fine dust filtration relative to conventional systems. In tests with filter installations according to embodiments of the invention efficiencies of at least 92% were achieved. Conventional systems for air filtration in animal accommodations only reach a retention of a maximum of 80% with such a test substance. Although conventional systems perform reasonably well in respect of filtration of coarse particles (larger than about 10 µm), it is found that only a small part of the supplied fine dust (smaller than about 10 µm) is filtered from the air in conventional systems. The filter installation according to the invention is however able to filter both large particles (> 10 µm) and small particles (< 10 µm) from the air in effective manner. This is particularly relevant since such small particles (< 10 µm) form the greatest risk to the health of people and animals.

The gas displacing means force the gas for filtering through the water which is provided in the container during use. The gas displacing means for instance comprise fans and/or a venturi is used. The gas displacing means are preferably arranged on or close to the blow-out side of the outlet. The gas displacing means can particularly be embodied as air displacing means for displacing air.

Since the filter is gas-permeable, contaminated gas can be drawn in from the inlet. Due to the gas displacement, water is however also displaced in the direction of the outlet. The filter counteracts the water displacement in the direction of the outfeed of the filter installation. A part of the outlet is preferably embodied as vertical pipe part, and the filter is placed in this vertical pipe part so that water which is retained by the filter falls back into the container.

The gas-permeable filter is preferably embodied as an air-permeable filter.

It has been found that the water in the container is mixed with the indrawn gas in turbulent manner during use, which increases the effectiveness of the filtration. The filter installation essentially creates a turbulent mixture of water and gas in the container. The turbulent water/gas column functions as filtration medium.

A further advantage of the filter installation according to the invention is that microorganisms such as bacteria are filtered from the gas. The reduction of the number of microorganisms in the filtered gas is greater than in conventional filter installations.

The gas-permeable filter comprises at least one filter mat. According to the invention, more than one gas-permeable filter can be provided in the outlet. The outlet for instance comprises a first filter and a second filter, as seen in the direction of flow. The first filter is for instance more permeable than the second filter. In a first example the first filter is embodied with a coarser mesh relative to the second filter. In a second example the first filter comprises more open space per volume than the second filter. In a third example the first filter comprises a lower density than the second filter.

The filter mat is arranged upstream of the gas displacing means, as seen in the direction of flow from the inlet to the outlet.

A filter mat is a porous structure. The filter mat for instance comprises for this purpose a porous material. The porous material is for instance a plastic foam such as polyether foam.

The porous structure of the filter mat is preferably realized by means of a filter mat on the basis of synthetic fibres or synthetic wires. The woven or non-woven plastic material preferably comprises intermediate spaces, so that a gas-permeable filter results.

In a currently preferred embodiment the filter mat is formed by a network of synthetic wires, i.e. the filter mat comprises a number of synthetic wires which are mutually interwoven. The synthetic wires are for instance woven so as to form a filter mat, or synthetic wires are compressed into a filter mat. In another example the filter mat is formed by a number of extruded synthetic wires, each having one or more loops, wherein the wires become mutually enmeshed.

The filter mat for instance has an open space of 90%-98%. This means that the percentage by volume of the material from which the filter mat is built up amounts to 2%-10% of the total volume of the filter mat.

The filter mat for instance has a density of 25-100 kg/m³, preferably 35-95 kg/m³, more preferably 45-90 kg/m³ and most preferably 50-85 kg/m³. It is noted that this relates to the density of the filter mat as a whole, i.e. the weight of the filter mat per the total volume of the filter mat. This should not confused with the density of the material from which the filter mat is formed, which will generally be higher.

The filter mat preferably has a specific surface area of 150-500 m²/m³, preferably 165-360 m²/m³, and most preferably 180-280 m²/m³. In the case that the filter mat comprises a network of synthetic wires, the specific surface area corresponds to the ratio between the surface area of the wires and the total volume of the filter mat.

In an example a number of filter mats are applied. The filter mats are for instance stacked. A number of filter mats with different specific surface area and/or density and/or percentage of open space are for instance stacked. In another example the filter mats are not stacked but provided some distance from each other. In this example the filter mats can if desired also be embodied with a different specific surface area and/or density and/or percentage of open space.

An outer end of the outlet which debouches into the container is situated higher in the container than an outer end of the inlet which debouches into the container.

The inlet and the outlet both have an outer end which debouches into the container. The outer end of the inlet is situated at a lower height than the outer end of the outlet. In other words, the outer end of the inlet is arranged closer to the bottom of the container than the outer end of the outlet. This achieves that the outer end of the inlet which debouches into the container can be placed below the water level during use, while the outer end of the outlet is situated above the water level. An underpressure can hereby be created in the outlet and container in effective manner for the purpose of drawing in the gas for treating, such as contaminated air, via the inlet.

An outer end of the outlet which debouches into the container and/or an outer end of the inlet which debouches into the container are preferably embodied as substantially vertical pipe parts.

The container is substantially cylindrical, and the inlet comprises a number of inlet pipes. Furthermore, the opening plane of the outer end of each inlet pipe which debouches into the container is arranged substantially vertically. The openings of the outer ends of the inlet pipes which debouch into the container are directed toward the longitudinal axis of the cylindrical container.

In the context of the invention "substantially cylindrical" is understood to mean a container with a circular base, i.e. a circle-cylindrical container, but also a container with a polygonal base, for instance a hexagonal or octagonal base.

Vertically arranging the opening plane of the openings of the inlet pipes which debouch into the container gives the gas guided via the inlet pipes into the container a horizontal directional component. The water mass present in the container during use is hereby set into motion in effective manner, so that the gas for treating and the water in the container are thoroughly mixed.

The opening plane of the inlet pipes is preferably situated partially but not wholly under water. The water level is preferably chosen such that the outer ends of the inlet pipes which debouch into the container are situated about 10-100 mm under water, more preferably about 10-50 mm, still more preferably about 10-30 mm and most preferably about 10-20 mm. Experiments have shown that a turbulent airflow which is very rich in water is obtained in this manner.

The outlet openings of the inlet pipes are preferably situated less than halfway under water. The water level is for instance situated at a distance D above the underside of the outlet openings of the inlet pipes, wherein this distance D is for instance 5-50% of the diameter of the openings, more preferably 5-25%, still more preferably 5-15% and most preferably 5-10%.

In an embodiment the bottom of the container is convex, so that the bottom is longer along its edge than at the centre of the container.

This achieves that dirt in the water in the container collects along the bottom edge. The dirt can hereby be removed in relatively simple manner by providing a discharge in the container close to the bottom edge.

In an embodiment the container is connected via a conduit to a sounding vessel for reading the water level in the container.

According to the law of communicating vessels the water level in the sounding vessel is equal to the water level in the container to which the sounding vessel is connected. The water level in the container can therefore be determined in simple manner by looking at the water level in the sounding vessel. This is particularly relevant when the container is not easily accessible. The water in the container will moreover be set into motion by the airflow during use of the filter installation, which results in fluctuations in the water level. The water level in the sounding vessel will however fluctuate significantly less, so that the water level can be read properly.

The conduit is preferably connected to a lower part of the container in order to guarantee that this connection is always situated under water during use.

In the context of the invention sounding vessel is understood to mean any suitable container. The sounding vessel can for instance be embodied as a vessel or as a tube.

The upper side of the sounding vessel is connected to the outside air, i.e. is in any case not closed airtightly, in order to guarantee that the water level in the sounding vessel corresponds to the water level in the container.

The sensor is preferably arranged in the sounding vessel for the purpose of measuring the water level in the sounding vessel. The sensor comprises for instance a float, for instance in combination with a scale division, so that the water level can be read on the basis of the position of the float relative to the scale division. An electronic sensor is however preferably applied.

In a currently preferred embodiment the gas displacing means are embodied as a centrifugal fan.

Applying a centrifugal fan, also referred to as radial fan, makes it possible for a relatively high underpressure to be formed for the purpose of forcing the gas for cleaning through the water in the container.

The gas displacing means are preferably suitable to create a pressure difference of at least 500-1000 Pascal, and the gas displacing means are more preferably suitable to create a pressure difference of about 500-750 Pascal.

The outlet is preferably embodied as a vertical pipe and the centrifugal fan is accommodated in a housing connecting to the outlet and provided with a water discharge. The centrifugal fan is likewise arranged vertically here, i.e. its rotation axis is arranged vertically. The gas exiting the outlet can still be humid to some extent. Because a centrifugal fan blows out the gas in radial direction, water which is possibly present in the gas is flung against the housing. The water then flows downward along the side walls of the housing under the influence of gravity. The water discharge discharges the water.

The housing of the centrifugal fan for instance has a greater diameter than the tubular outlet. In this example the walls of the housing extend beyond the pipe wall of the outlet. The water discharge is then connected to the protruding part of the housing.

The filter installation further comprises a first sensor for measuring the rate of flow of the gas and a controller operatively connected to the first sensor and configured to regulate the rate of flow of the gas by means of the features of claim 1 and on the basis of the rate of flow measured by the first sensor.

If the gas displacing means force the gas through the water with too much force, a considerable part of the water will be entrained in the direction of the outlet. If the gas displacing means however crcatc a pressure difference which is smaller than the water pressure on the inlet side, i.e. the water pressure of the water level in the container relative to an outer end of the inlet which debouches into the container, the gas will not be guided through the water. By regulating the rate of flow of the gas a balance can be found between these two extremes, even if the water level changes in the course of time.

The sensor is preferably configured to measure the rate of flow of the gas on the inlet side, but can alternatively be configured to measure the rate of flow of the gas on the outlet side.

In an alternative embodiment the first sensor is a sensor for measuring pressure in the inlet and/or outlet.

In a further preferred embodiment of the filter installation according to claim 1, the controller is operatively connected to the gas displacing means and the controller is moreover configured to control the gas displacing means on the basis of the rate of flow measured by the first sensor.

The inlet can be configured to be movable, such that the distance of the outer end of the inlet which debouches into the container relative to the bottom of the container is adjustable. The distance to the water in the container can be reduced and increased, and the water pressure can thereby be adjusted in effective manner, by providing the inlet movably. The inlet can preferably be moved automatically, wherein the controller controls the movement of the inlet.

Arranged in an embodiment is a drip catcher which is positioned downstream of the outlet, as seen in the flow direction of the gas.

The gas exiting the container can entrain droplets. Certainly in view of the fact that it is precisely in the water that the dust is captured, is it preferable for the droplets entrained from the container by the gas to be captured. As described above, this can for instance be realized by providing a centrifugal fan in a housing with water discharge. A drip catcher can alternatively or additionally be provided.

The drip catcher is for instance embodied as an inclining wall or as a series of plates arranged such that the gas has to follow a line which is not straight. Different drip catchers are per se known in practice. In another embodiment the drip catcher comprises a woven gauze such as a woven metal gauze. This is for instance a steel gauze, such as a stainless steel gauze.

In an exemplary embodiment the container is connected via a first valve to a feed for infeed of water and is connected via a second valve to a discharge for discharge of water. In this embodiment the filter installation further comprises a controller for controlling the supply valve and discharge valve so as to regularly replenish the water in the container. The controller is for instance adjusted to each time completely replenish the water in the container after a predetermined time. In an alternative embodiment fresh water is continuously guided into the container and water is continuously discharged from the container. That is, replenishing takes place in batch-wise or continuous manner. The controller can be integrated with a controller for regulating the rate of flow of the gas, or can be provided as separate controller.

In an exemplary embodiment the container is connected via a discharge to a device for treating water. The container is for instance connected via a discharge with a valve to a device for treating water. In a further example a discharge of the device for treating water is coupled to the container via a return conduit for the purpose of returning treated water to the container of the filter installation.

The device for treating water for instance comprises a device for biological treatment of water.

The device for treating water for instance comprises a drum filter. The drum filter is adjusted to the current water level in the basin of the filter installation. After passing the drum filter, the treated water is returned to the container via an overflow. In another example treated water is discharged. An equal quantity of fresh water is in this case preferably guided into the container. Part of the treated water can if desired be discharged, while another part is returned to the container.

In a further embodiment according to the invention a third sensor is provided for measuring the quantity of dust which has been taken up by the water in the container. The third sensor comprises for instance a light detector for measuring the light transmission of the water in the container. The light transmission of the water will decrease gradually due to taking up of the dust. The controller is preferably adjusted to replenish the water in the container if the quantity of dust in the water measured by the third sensor exceeds a predetermined threshold value. The controller for instance controls the first valve and the second valve so that the water is replenished if the light transmission of the water falls below a predetermined threshold value.

The filter installation for instance comprises an additional filter upstream of the inlet or downstream of the outlet.

If an additional filter is provided upstream of the inlet, a prefiltration can be achieved so that the water present in the container during use is less likely to becomes saturated with dust. Compared to conventional filter installations, the filter installation according to the invention is particularly effective in respect of capturing very fine dust particles, for instance dust particles smaller than 100 µm, smaller than 50 µm or smaller than 20 µm. The large dust particles can then be captured with the prefilter so that the capacity of the filter installation according to the invention is used optimally to filter small particles, and rapid saturation of the water in the container is counteracted. The prefilter is for instance suitable for filtration of particles larger than about 10 µm, preferably about 20 µm, more preferably about 30 µm, still more preferably about 40 µm and most preferably larger than about 50 µm. A misting installation is for instance used as prefilter, wherein sprayers create a water mist for capturing dust particles from the gas guided through the water mist.

If the filter installation according to the invention is applied in an animal accommodation, the accommodation can be equipped with fans arranged in a wall of the accommodation, these fans being configured to displace the air for filtering in the direction of the inlet of the filter installation. In other words, the fans blow the air in the direction of the inlet of the filter installation. It is however emphasized that such additional fans are not necessary according to the invention.

In an embodiment an animal accommodation is equipped with the filter installation and the gas displacing means are configured for an air displacement of a minimum of 5000 m³ per hour, preferably a minimum of 10,000 m³ per hour, more preferably a minimum of 15,000 m³ per hour and still more preferably a minimum of 20,000 m³ per hour, and most preferably a minimum of 25,000-30,000 m³ per hour.

It is however emphasized that the filter installation can be embodied in different dimensions and with different air displacement, depending on the application.

It is noted that, in addition to applications in an animal accommodation, the filter installation as described above also has other applications, for instance the cleaning of exhaust gases of a generator.

According to the invention it is also possible to convert an existing animal accommodation and to provide it with a filter installation as described above.

The disclosure further relates to a method for providing an animal accommodation with a filter installation for filtering dust from animal accommodation air, comprising of:
- providing a container for water, with an inlet and an outlet;
- coupling the inlet to an air outlet of the animal accommodation;
- providing air displacing means for guiding the animal accommodation air for filtering via the inlet and into the container and guiding the air which has been guided through the container from the outlet;
- arranging an air-permeable filter in the outlet.

In addition, the invention relates to a use of an animal accommodation or filter installation as described above, comprising the partial filling of the container of the filter installation with water, such that an outer end of the inlet which debouches into the container is situated below the water level when the air displacing means are switched off, while an outer end of the outlet which debouches into the container is situated above the water level.

The same advantages and effects as described above in relation to the animal accommodation and the filter installation according to the invention also apply to the method and the use. The method can particularly be applied to provide an animal accommodation with a filter installation as described above.

According to the disclosure, it is also possible to provide water in the container with an additive. Chlorinated water, sulphuric acid, aluminium sulphate, iron(III) chloride and/or sodium hydroxide is for instance added to the water in the container.

The additive preferably comprises an agent for reduction of ammonia, such as sulphuric acid and/or citric acid.

Tests have shown that, in the case that an ammonia-reducing additive is added to the water, the ammonia reduction of the filter installation increases gradually after the filter installation is switched on. It has been found that this start-up effect can be limited or can even be prevented by keeping the at least one filter mat wet when the filter installation is switched off. A misting installation is preferably applied as prefilter for this purpose. The gas for treating first passes through the misting installation and then through the filter installation according to the invention. The gas entrains moisture from the misting installation here. The misting installation can apply water coming from the container of the filter installation or can comprise a separate water supply, optionally with an ammonia-reducing additive.

Another device for humidifying the gas can if desired be provided on the inlet side. Applying a misting installation however has the advantage that not only is a favourable effect on the ammonia reduction obtained, but relatively large dust particles are also captured in this prefiltration step.

Further advantages, features and details of the invention are elucidated on the basis of preferred embodiments thereof, wherein reference is made to the accompanying drawings.
- Figure 1 shows an isometric view of a non-claimed filter installation
- Figure 2 shows a schematic side view in partial cross-section of the filter installation according to figure 1;
- Figure 3 shows a cross-sectional side view of an animal accommodation with a merely schematic view of a filter installation according to an embodiment of the invention;
- Figure 4 shows an isometric view of a further embodiment of the filter installation according to the invention;
- Figure 5 shows the embodiment of figure 4 in cross-section; and
- Figure 6 shows a further variant of the embodiment of figure 4 in cross-section.

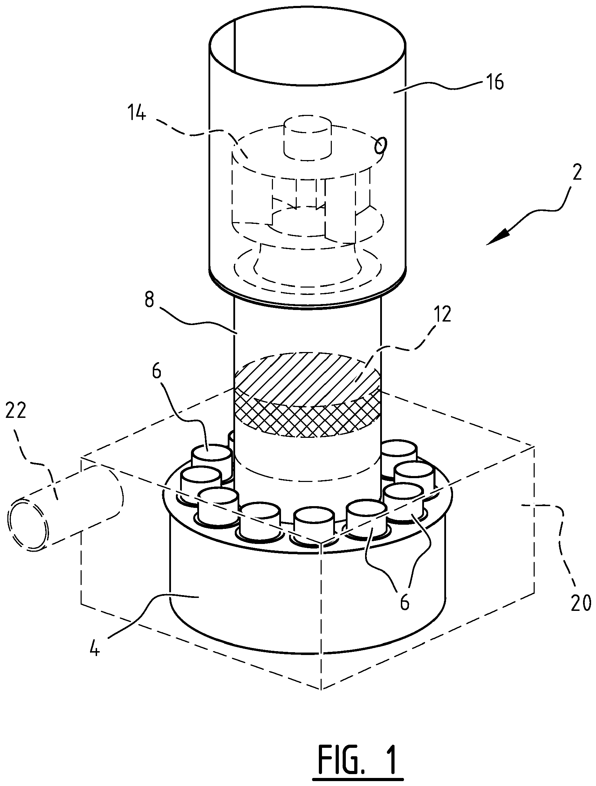

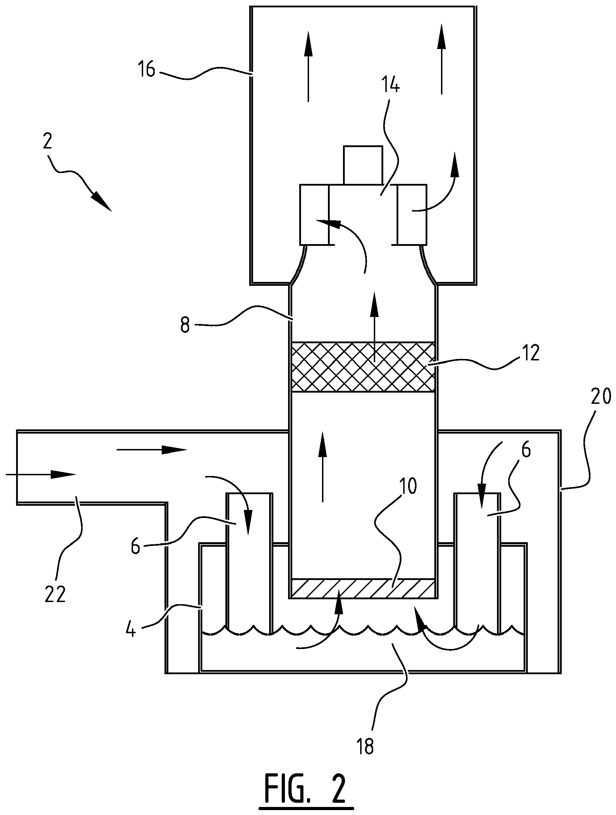

Filter installation 2 (figures 1 and 2) comprises a container 4 in which vertical pipes 6 are provided as inlet and a vertical pipe 8 as outlet. In the shown example container 4 is provided with a plurality of inlet pipes 6, i.e. twelve. It is however possible to provide a different number of inlet pipes, for instance one, two or more.

Outlet pipe 8 is in the shown example provided centrally in the container and is surrounded by inlet pipes 6. Another configuration can however be envisaged.

Outlet pipe 8 has a diameter greater than the individual diameter of inlet pipes 6. The surface area of the pipe cross-section of outlet pipe 8 is however preferably equal or at least substantially equal to the sum of the surface area of the pipe cross-sections of feed pipes 6.

Outlet pipe 8 is provided on its underside with a first air-permeable filter. In the shown embodiment first filter 10 is a plastic foam, i.e. polyether foam. A second air-permeable filter 12 is placed some distance above filter 10. In the shown example filter 12 comprises a filter mat woven from polypropylene wires, with an open space of about 92%. The thickness of filter 12 is for instance 2-10 cm, preferably 4-8 cm, for instance about 5 cm.

Centrifugal fan 14 is provided on the upper side of outlet pipe 8. Fan 14 is accommodated in housing 16.

In the shown example fan 14 is placed on top of outlet pipe 8. it is however likewise possible to place the fan at a position wherein fan 14 is connected to outlet pipe 8 via for instance an extraction duct.

Container 4 is partially filled with water. Figure 2 shows water level 18 in the case that fan 14 is switched off. If fan 14 is switched off, a turbulent mixture of water and air will result in container 4. In the switched-off situation water level 18 reaches to the underside of inlet pipes 6. The lower outer end of outlet pipe 8 is situated higher relative to the lower outer end of inlet pipes 6, so that the distance from the lower outer end of outlet pipe 8 to water level 18 is greater than the distance from the underside of inlet pipes 6 to water level 18. Water level 18 can alternatively lie slightly above the lower outer end of inlet pipes 6, for instance 1-10 cm, preferably 3-8 cm and most preferably about 5 cm. When fan 14 is switched off the water level preferably lies some distance from the lower outer end of outlet pipe 8.

Filter installation 2 is accommodated in housing 20, which is provided with connector 22 for connecting filter installation 2 to for instance an animal accommodation or a generator. Additional fans are optionally provided for the purpose of carrying air for cleaning to filter installation 2.

For use of filter installation 2 a quantity of water is introduced into container 4. When fan 14 is switched off water level 18 has to reach at least to the underside of inlet pipes 6. Water level 18 preferably lies above the underside of inlet pipes 6, for instance 1-5 cm thereabove. Water level 18 however preferably remains below the inlet opening of outlet pipe 8, as shown in figure 2. As soon as fan 14 is switched on an underpressure is created in outlet pipe 8 and container 4, whereby air is drawn in via inlet pipes 6 and connector 22. Additional fans are optionally provided in order to displace the air in the direction of inlet pipes 6, for instance on the inlet side of connector 22.

Filter installation 2 comprises a sensor (not shown) for measuring the air speed and a controller (not shown) connected thereto for regulating the air speed. The sensor is for instance placed in outlet pipe 8 or in one of the inlet pipes 6. It is also possible according to the invention to use a plurality of sensors in order to thus achieve a more accurate measurement. If the air speed rises above a predetermined upper threshold value, the controller reduces the air speed. If the air speed falls below a predetermined lower threshold value, the controller increases the air speed.

In a first example the controller is connected to fan 14 and the controller adjusts the rotation speed of fan 14 on the basis of the air speed measured by the sensor. If the air speed rises above the upper threshold value, the controller reduces the rotation speed of fan 14. If the air speed falls below the lower threshold value, the controller increases the rotation speed of fan 14.

In a second example inlet pipes 6 are vertically movable. Each inlet pipe 6 can for instance be moved individually, or inlet pipes 6 can be moved together. The controller is in this example configured to automatically move the inlet pipes in vertical direction on the basis of the measured air speed. Moving an inlet pipe 6 upward changes the distance to the water in container 4 so that less force is necessary for drawing in air via inlet pipe 6. Conversely, lowering an inlet pipe 6 in container 4 will result in more resistance. If the air speed rises above an upper threshold value, the controller lowers one or more inlet pipes 6 in order to increase the resistance. If the air speed falls below a lower threshold value, the controller raises one or more inlet pipes 6 in order to reduce the resistance.

In a third example container 4 is provided with a valve which is connected to a water supply such as a tap. Container 4 is moreover provided with a valve for discharge of water from the container. The controller is configured to control the valves. If the air speed measured by the sensor rises above an upper threshold value, the controller controls the supply valve so as to obtain more water in container 4. The resistance is hereby increased when air is drawn in via inlet pipes 6, and the air speed decreases. If the air speed measured by the sensor falls below a lower threshold value, the controller controls the discharge valve so that part of the water is removed from container 4. The resistance to the drawing in of air decreases hereby, so that the air speed increases.

The above stated examples can moreover be combined. The controller for instance controls both fan 14 and valves for supply and discharge of water to and from container 4.

It is possible to provide the container with a supply valve and discharge valve for replenishing water in container 4. These valves can be the same valves as described above for controlling the air speed, or can be provided as separate valves. Filter installation 2 for instance comprises a controller for controlling the supply valve and the discharge valve to regularly replenish the water in the container. The controller is for instance adjusted to each time completely replenish the water in the container after a predetermined time. In an alternative embodiment fresh water is continuously guided into the container and water is continuously discharged from the container. That is, according to the invention replenishing takes place in batch-wise or continuous manner. The controller can be integrated with a controller for regulating the air speed or can be provided as separate controller.

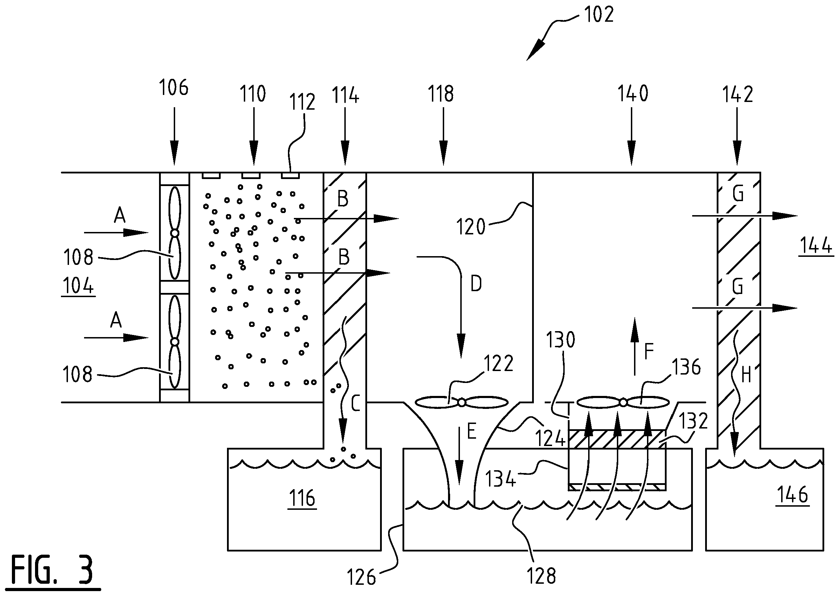

According to the invention, animal accommodation 102 (figure 3) comprises an indoor space 104 where the livestock is kept. Fans 108 for carrying contaminated air from indoor space 104 as according to arrows A are provided in a wall 106 of animal accommodation 102. The air is carried to a prefilter, which is formed in the shown example by air washer 110. Air washer 110 comprises sprayers 112 which create a water mist whereby relatively large dirt particles are filtered from the air. Entrained hairs or feathers are for instance likewise filtered from the air. The humid air passes through dust filter 114 as according to arrow B here, wherein the dirt particles are filtered from the air and are carried into a first water basin 116 as according to arrow C. It is emphasized that the prefiltration by means of mist chamber 110 and filter 114 is optional, and that other methods of prefiltration are also possible. Prefiltration can also be completely dispensed with according to the invention.

The air then enters chamber 118, which is closed on its rear side by wall 120. Provided on the underside of the chamber is an additional fan 122 which guides the air via an inlet pipe 124 to water basin 126 as according to arrows D and E. Line 128 shows schematically the water level in basin 126 when fans 108, 122, 136 are switched off. When fans 108, 122, 136 are switched on, a turbulent mixture of air and water will result in container 126. Basin 126 is also provided with a vertical outlet pipe 130 in which a filter mat 132 of synthetic fibres is placed. Furthermore, outlet pipe 130 optionally comprises on its underside a second filter 134, which in the shown example is likewise embodied as a filter mat. A fan 136 is provided on the upper side of outlet pipe 130. Fan 136 is shown schematically in the figure as an axial fan, however, a radial fan (also referred to as centrifugal fan) is preferably applied.

The filtered air is for instance carried directly to the outside air after passing through outlet 130. Alternatively, a drip catcher 142 can optionally be provided through which the air is carried from chamber 140 and in the direction of outside air 144 as according to arrow G. Possibly remaining droplets in the treated air are guided in the direction of an additional basin 146 as according to arrow H.

In an alternative embodiment one or more of the fans 108, 122, 136 is replaced by a venturi as air displacing means. Air or water is for instance blown through wall 106, inlet pipe 124 or outlet pipe 130 by means of compressed air or a pump, whereby the air for cleaning or the cleaned air is drawn in by the resulting underpressure. At least one of the fans 108, 122, 136 is preferably a centrifugal fan.

According to the invention, it is likewise possible to convert an existing animal accommodation with filter installation. An accommodation for instance already comprises a wall 106 with fans, and air washer chamber 110 with sprayers 112, a filter wall 114, a water basin 116 and a drip catcher 142. In such a filter installation a wall 120, fan 122, inlet pipe 124, water basin 126, outlet pipe 130 and fan 136 can be added according to the invention. The effectiveness of the filter installation for capturing fine dust is hereby increased.

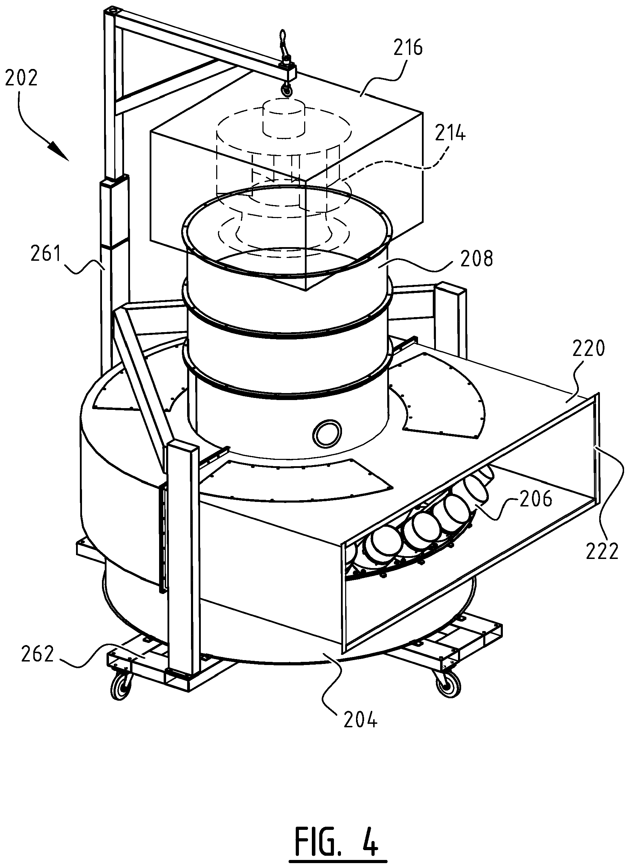

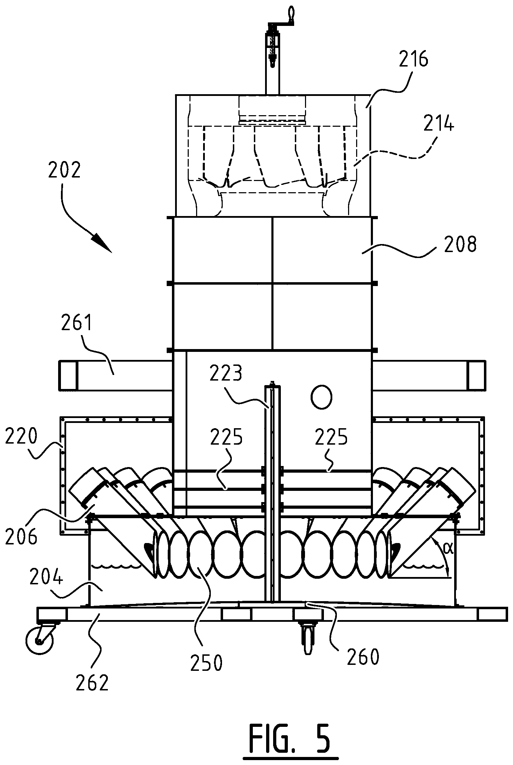

Filter installation 202 (figures 4 and 5) is a variant of filter installation 2. Installation 202 likewise comprises a container 204 with a number of inlet pipes 206. An outlet pipe 208 is moreover connected to container 204 and a fan 214, which is accommodated in housing 216, is arranged on the upper side of outlet pipe 208.

The inlet sides of inlet pipes 206 are accommodated in a housing 220. Housing 220 is provided with a connecter 222 for connecting installation 202 to a gas outlet in order to thus introduce gas for treating into installation 202. Connector 222 is for instance coupled to the air outlet of an animal accommodation, or the flue gas outlet of a generator.

Just as installation 2, filter installation 202 additionally comprises at least one filter mat in outlet pipe 208, although this filter mat is not shown in figures 4 and 5. The filter mat is situated upstream of fan 214, as seen in the direction of flow from the inlet to the outlet. An upright 223 is optionally provided for the purpose of arranging the filter mat in the container. In the shown example upright 223 is mounted centrally on the bottom 260 of container 204. Upright 223 extends from bottom 260 into outlet 208. Upright 223 extends here at least to the height at which the filter mat is placed. Disc-like carriers 225 which can each carry a filter mat are mounted on the upright. The disc-like carriers comprise a coarse grid as bearing surface, for instance with a mesh width of 5-10 cm. By mounting a plurality of disc-like carriers 225 it is possible to place a plurality of filter mats if desired, and/or the position of the filter mat can be chosen by the user.

The filter mat is for instance constructed from a network of polypropylene wires.

A difference between installation 202 and installation 2 is that inlet pipes 206 of filter installation 202 are configured differently than inlet pipes 6 of installation 2, as can be seen in figure 5. The opening 250 on the outer end of each inlet pipe 206 which debouches into container 204 is arranged vertically. That is, the surface of opening 250 is oriented substantially vertically. Gas exiting inlet pipes 206 and entering container 204 hereby has a horizontal movement component. Openings 250 are moreover directed toward the longitudinal axis of cylindrical container 204.

In the shown example inlet pipes 206 are embodied as straight pipes which are placed at an angle α relative to the horizontal plane and with lower ends which are chamfered so as to form the vertically oriented openings 250. Inlet pipes 206 need however not be straight, they can alternatively have a bend.

A further difference is that bottom 260 of container 204 of installation 202 is slightly curved. Bottom 260 particularly lies higher in the centre of cylindrical container 204 than at its edges, so that dirt in the water in container 204 accumulates along the edges of container 204 during use. Container 204 for instance comprises a draw-off tap for drawing off dirty water (not shown).

An optional hoisting construction 261 for placing the fan on outlet 208 is provided in the shown example (figure 5). Also shown is that installation 202 can optionally be placed on a platform 262 which is provided with wheels for displacing installation 202.

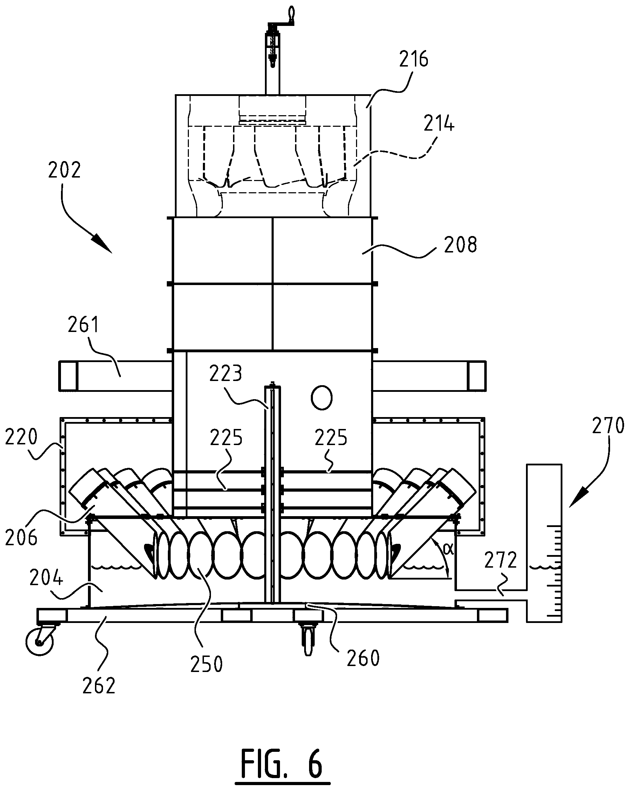

Figure 6 shows a variant of installation 202 with a sounding vessel 270 which is in liquid communication with container 204 via a conduit 272. The one outer end of conduit 272 is connected for this purpose to container 204 in a lower zone, and the other outer end to sounding vessel 270 in a lower zone. Container 204 and sounding vessel 270 form communicating vessels. In the shown example sounding vessel 270 comprises a scale division so that the water level in sounding vessel 270, and thereby in container 204, can be read in simple manner. Sounding vessel 270 can additionally comprise an electronic sensor configured to generate a signal which is indicative of the water level in sounding vessel 270.

### Test 1

A test for determining the efficiency in application of the filter installation in an animal accommodation was performed with filter installation 2 according to figures 1 and 2. For a poultry house the typical dust level per animal per year is about 25 g. On the basis of 40,000 laying hens this results in a yearly dust level of 1000 kg for a typical poultry house. This corresponds to an emission of 0.11 kg of dust per hour. A house of 40,000 has to be ventilated in accordance with a maximum ventilation requirement of 316,000 m³ per hour. On the basis of fans which can achieve 24,000 m³ per hour, 13 fans are necessary for this purpose. Ventilation will in practice however not take place at maximum level throughout the year. As a rule of thumb it can be assumed that about 60% of the ventilation capacity is nominally used. This corresponds to a nominal deployment of 6 fans. The nominal dust level per fan amounts thereby to about 0.02 kg per hour. The test is based on 0.03 kg per hour per fan, wherein some margin has thus been allowed relative to the calculated nominal dust level.

In test 1 a filter installation according to figures 1 and 2, thus with one fan 14, was run for one hour. 30 grams of dust coming from poultry houses was supplied during the hour. This dust comprises particles of different sizes, both fine dust particles with a particle size of up to about 10 µm and coarse particles with a particle size of more than 10 µm. Dust exiting with the air is measured on the outlet side of the filter installation by means of isokinetic sampling in order to thus determine the efficiency of the filter installation. The efficiency of the filter installation amounted to 99.9649%.

### Test 2

A second test was performed with filter installation 202 of figures 4-6. Use was made in this test of a fine dust meter which counts the number of particles, also referred to as "particle counter", and can moreover measure the particle size on the basis of the scattering or absorption of laser light. A comparison was made between a measurement of the air in a poultry house and a measurement of the air of the same poultry house after passing through filter installation 202. The results are summarized in the table below.

| **Dimension** (µm) | **Exhaust air** (quantity / l) | **Exhaust air after filtering** (quantity / l) | **Reduction** (%) |
|---|---|---|---|
| 0.3 | 132995 | 59360 | **55** |
| 0.5 | 60768 | 23404 | **61** |
| 1.0 | 18525 | 5496 | **70** |
| 2.5 | 6188 | 850 | **86** |
| 5.0 | 1102 | 149 | **86** |
| 10.0 | 583 | 49 | **92** |

This table shows on the one hand the importance of distinguishing between the different particle sizes. This is because the number of particles PM 0.3-2.5 is considerable. It is moreover the case that it is precisely these particles which are easily deposited in the lungs and can thus cause damage to health.

The ammonia reduction was moreover determined in this setup. Using an electrochemical measuring cell an ammonia concentration of 11 ppm was measured in the house, while an ammonia concentration of 2.1 ppm was measured after filtration of the air with device 202. That is, the percentual ammonia reduction was determined at 81%.

The present invention is by no means limited to the above described preferred embodiments thereof. The rights sought are defined by the following claims, within the scope of which many modifications can be envisaged.

## Claims

1. Filter installation (2) for removing dust from animal accommodation air, the filter installation (2) comprising:
a substantially cylindrical container (4) for at least partially filling with water during use, provided with an inlet (6) and an outlet (8);
- air displacing means (14) for, during use, guiding the animal accommodation air for filtering via the inlet (6) and through a water mass (18) present in the container (4) and guiding air which has been guided through the water mass in the container (4) from the outlet (8); and
- an air-permeable filter (10,12) arranged in the outlet (8), **characterized by** the filter comprising a filter mat (10,12) which is situated upstream of the gas displacing means (14), as seen in the direction of flow from the inlet (6) to the outlet (8),
wherein the filter mat (10,12) comprises synthetic fibres or synthetic wires, wherein the filter mat has an open space of 90% - 98%, the inlet comprises a number of inlet pipes (6) having openings at the outer ends of the inlet pipes (6) which debouch into the container (4) and are directed toward the longitudinal axis of the container (4), wherein the opening plane of the outer end of each inlet pipe (6) which debouches into the container (4) is arranged substantially vertically and wherein the water level is situated at a distance above the underside of the openings of the inlet pipes and wherein the distance is adjustable by either:
- providing the inlet moveable; or,
- by the container (4) further comprising a first valve which is connected to a water supply such as a tap and a second valve for discharge of water from the container and
wherein the installation further comprises a controller configured either to control the vertical movement of the inlet pipes (6), or to control the valves for supply and discharge of water to and from container (4), and wherein an outer end of the outlet which debouches into the container is situated above the water level higher in the container than the outer end of each inlet pipe (6), and wherein the filter installation further comprises a first sensor for measuring the air speed and
wherein the controller is configured to keep the air speed between a predetermined lower threshold value and a predetermined upper threshold value, either by vertical movement of inlet pipes (6) or by supply or discharge of water to or from container (4), and
wherein the openings of the inlet pipes (6) are arranged in a vertical direction such that the gas guided via the inlet pipes into the container is given a horizontal directional component so that the water mass during use is set into motion and the gas and the water in the container are thoroughly mixed.

2. Filter installation as claimed in claim 1, wherein the open space is 92%-96%, more preferably is about 94%.

3. Filter installation as claimed in any of the foregoing claims, wherein the filter mat has a density of 25-100 kg/m³, preferably 35-95 kg/m³, more preferably 45-90 kg/m³ and most preferably 50-85 kg/m³ and/or wherein the filter mat has a specific surface area of 150-500 m²/m³, preferably 165-360 m²/m³, and most preferably 180-280 m²/m³.

4. Filter installation as claimed in any of the foregoing claims, wherein an outer end of the outlet (8) which debouches into the container (4) is situated higher in the container (4) than an outer end of the inlet (6) which debouches into the container (4).

5. Filter installation as claimed in any of the foregoing claims, wherein an outer end of the outlet (8) which debouches into the container (4) and/or an outer end of the inlet (6) which debouches into the container (4) are embodied as substantially vertical pipe parts.

6. Filter installation as claimed in any of the foregoing claims, wherein the bottom of the container (4) is convex, so that the dirt in the water in the container collects along the bottom edge.

7. Filter installation as claimed in any of the foregoing claims, wherein the container (4) is connected via a conduit to a sounding vessel for reading the water level (18) in the container (4), wherein a sensor is preferably arranged in the sounding vessel for the purpose of measuring the water level in the sounding vessel.

8. Filter installation as claimed in any of the foregoing claims, wherein the air displacing means are embodied as a centrifugal fan.

9. Filter installation as claimed in any of the foregoing claims, wherein the controller is operatively connected to the air displacing means and is configured to control the air displacing means on the basis of the air speed measured by the first sensor.

10. Animal accommodation comprising a filter installation according to anyone of claims 1-9.

11. Use of a filter installation as claimed in claims 1 - 9 or of an animal accommodation as claimed in claim 10, comprising the partial filling of the container of the filter installation with water, such that an outer end of the inlet which debouches into the container is situated below the water level when the air displacing means are switched off, while an outer end of the outlet which debouches into the container is situated above the water level.

## Patentansprüche

1. Filterinstallation (2) zum Entfernen von Staub aus Stallluft, wobei die Filterinstallation (2) aufweist:
- einen im Wesentlichen zylindrischen Behälter (4), um ihn während der Verwendung wenigstens teilweise mit Wasser zu füllen, der mit einem Einlass (6) und einem Auslass (8) versehen ist;
- Luftverdrängungseinrichtungen (14), um während der Verwendung die Stallluft zum Filtern über den Einlass (6) und durch eine in dem Behälter (4) vorhandene Wassermasse (18) zu leiten und Luft, die durch die Wassermasse in dem Behälter (4) geleitet wurde, aus dem Auslass (8) zu leiten; und
- ein luftdurchlässiges Filter (10, 12), das in dem Auslass (8) angeordnet ist, **dadurch gekennzeichnet, dass** das Filter eine Filtermatte (10, 12) aufweist, die in der Strömungsrichtung von dem Einlass (6) zu dem Auslass (8) gesehen strömungsaufwärtig von den Gasverdrängungseinrichtungen (14) gelegen ist,
wobei die Filtermatte (10, 12) synthetische Fasern und synthetische Drähte aufweist, wobei die Filtermatte einen Freiraum von 90% - 98% hat, wobei der Einlass eine Anzahl von Einlassrohrleitungen (6) aufweist, die Öffnungen an den äußeren Enden der Einlassrohrleitungen (6) haben, die in den Behälter (4) münden und in Richtung der Längsachse des Behälters (4) gerichtet sind, wobei die Öffnungsebene des äußeren Endes jeder Einlassrohrleitung (6), die in den Behälter (4) mündet, im Wesentlichen vertikal angeordnet ist, und wobei der Wasserstand in einem Abstand oberhalb der Unterseite der Öffnungen der Einlassrohrleitungen gelegten ist und der Abstand einstellbar ist durch:
- bewegliches Bereitstellen des Einlasses; oder
- indem der Behälter (4) ferner ein erstes Ventil, das mit einer Wasserversorgung, wie etwa einem Wasserhahn, verbunden ist, und ein zweites Ventil für die Abgabe von Wasser aus dem Behälter aufweist, und
wobei die Installation ferner eine Steuerung aufweist, die konfiguriert ist, um entweder die vertikale Bewegung der Einlassrohrleitungen (6) zu steuern oder die Ventile für die Zuführung und Abgabe von Wasser an den und von dem Behälter (4) zu steuern, und wobei ein äußeres Ende des Auslasses, der in den Behälter mündet, oberhalb des Wasserstands höher in dem Behälter gelegen ist als das äußere Ende jeder Einlassrohrleitung (6), und wobei die Filterinstallation ferner einen ersten Sensor zum Messen der Luftgeschwindigkeit aufweist, und
wobei die Steuerung konfiguriert ist, um die Luftgeschwindigkeit entweder durch die vertikale Bewegung von Einlassrohrleitungen (6) oder durch die Zuführung oder Abgabe von Wasser an den oder aus dem Behälter (4) zwischen einem vorgegebenen unteren Schwellwert und einem vorgegebenen oberen Schwellwert zu halten, und wobei die Öffnungen der Einlassrohrleitungen (6) derart in einer Vertikalrichtung angeordnet sind, dass dem Gas, das über die Einlassrohrleitungen in den Behälter geleitet wird, eine horizontale Richtungskomponente verliehen wird, so dass die Wassermasse während der Verwendung in Bewegung gesetzt wird und das Gas und das Wasser in dem Behälter gründlich gemischt werden.

2. Filterinstallation nach Anspruch 1, wobei der Freiraum 92% - 95% ist, bevorzugter etwa 94%, ist.

3. Filterinstallation nach einem der vorhergehenden Ansprüche, wobei die Filtermatte eine Dichte von 25 - 100 kg/m³, bevorzugt 35 - 95 kg/m³, bevorzugter 45 - 90 kg/m³ und am bevorzugtesten 50 - 85 kg/m³ hat, und/oder wobei die Filtermasse eine spezifische Oberfläche von 150 - 500 m² /m³, bevorzugt 165 - 360 m²/m³ und am bevorzugtesten 180 - 280 m² /m³ hat.

4. Filterinstallation nach einem der vorhergehenden Ansprüche, wobei ein äußeres Ende des Auslasses (8), der in den Behälter (4) mündet, in dem Behälter (4) höher gelegen ist als ein äußeres Ende des Einlasses (6), der in den Behälter (4) mündet.

5. Filterinstallation nach einem der vorhergehenden Ansprüche, wobei ein äußeres Ende des Auslasses (8), der in den Behälter (4) mündet, und/oder ein äußeres Ende des Einlasses (6), der in den Behälter (4) mündet, als im Wesentlichen vertikale Rohrleitungsteile ausgeführt sind.

6. Filterinstallation nach einem der vorhergehenden Ansprüche, wobei der Boden des Behälters (4) konvex ist, so dass der Schmutz in dem Wasser sich entlang der Bodenunterkante sammelt.

7. Filterinstallation nach einem der vorhergehenden Ansprüche, wobei der Behälter (4) über einen Kanal mit einem Lotungsgefäß verbunden ist, um den Wasserstand (18) in dem Behälter (4) abzulesen, wobei bevorzugt zu dem Zweck, den Wasserstand in dem Lotungsgefäß zu messen, ein Sensor in dem Lotungsgefäß angeordnet ist.

8. Filterinstallation nach einem der vorhergehenden Ansprüche, wobei die Luftverdrängungseinrichtungen als ein Zentrifugalventilator ausgeführt sind.

9. Filterinstallation nach einem der vorhergehenden Ansprüche, wobei die Steuerung betriebsfähig mit der Luftverdrängungseinrichtung verbunden ist und konfiguriert ist, um die Luftverdrängungseinrichtungen auf der Basis der von dem ersten Sensor gemessenen Luftgeschwindigkeit zu steuern.

10. Stall, der eine Filterinstallation nach einem der Ansprüche 1-9 aufweist.

11. Verwendung einer Filterinstallation nach einem der Ansprüche 1-9 oder eines Stalls nach Anspruch 10, welche das teilweise Füllen des Behälters der Filterinstallation mit Wasser aufweist, so dass ein äußeres Ende des Einlasses, der in den Behälter mündet, unterhalb des Wasserstands gelegen ist, wenn die Luftverdrängungseinrichtungen ausgeschaltet sind, während ein äußeres Ende des Auslasses, der in den Behälter mündet, oberhalb des Wasserstands gelegen ist.

## Revendications

1. Installation filtre (2) pour éliminer de la poussière de l'air de logement d'animal, l'installation filtre (2) comprenant :
- un récipient sensiblement cylindrique (4) pour se remplir au moins partiellement d'eau pendant l'utilisation, doté d'une entrée (6) et d'une sortie (8) ;
- des moyens de déplacement d'air (14) pour, pendant l'utilisation, guider l'air de logement d'animal pour le filtrer via l'entrée (6) et à travers une masse d'eau (18) présente dans le récipient (4) et guider l'air qui a été guidé à travers la masse d'eau dans le récipient (4) depuis la sortie (8) ; et
- un filtre perméable à l'air (10, 12) agencé dans la sortie (8), **caractérisée en ce que** le filtre comprend un tapis filtrant (10, 12) qui est situé en amont des moyens de déplacement de gaz (14), vu dans la direction d'écoulement de l'entrée (6) vers la sortie (8),
dans laquelle le tapis filtrant (10, 12) comprend des fibres synthétiques ou des fils synthétiques, dans laquelle le tapis filtrant a un espace ouvert de 90 % à 98 %, l'entrée comprend un certain nombre de tuyaux d'entrée (6) ayant des ouvertures aux extrémités externes des tuyaux d'entrée (6) qui débouchent dans le récipient (4) et sont dirigés vers l'axe longitudinal du récipient (4), dans laquelle le plan d'ouverture de l'extrémité externe de chaque tuyau d'entrée (6) qui débouche dans le récipient (4) est agencé sensiblement verticalement et dans laquelle le niveau d'eau est situé à distance au-dessus de la face inférieure des ouvertures des tuyaux d'entrée et dans laquelle la distance est réglable soit :
- en fournissant l'entrée mobile ; ou,
- par le fait que le récipient (4) comprend en outre une première soupape qui est connectée à une alimentation en eau telle qu'un robinet et une deuxième soupape pour l'évacuation de l'eau depuis le récipient ; et
dans laquelle l'installation comprend en outre un dispositif commande configuré soit pour commander le mouvement vertical des tuyaux d'entrée (6), soit pour commander les soupapes d'alimentation en eau et d'évacuation d'eau vers et depuis le récipient (4), et dans laquelle une extrémité externe de la sortie qui débouche dans le récipient est située au-dessus du niveau d'eau plus haut dans le récipient que l'extrémité externe de chaque tuyau d'entrée (6), et dans laquelle l'installation filtre comprend en outre un premier capteur pour mesurer la vitesse de l'air et
dans laquelle le dispositif de commande est configuré pour maintenir la vitesse d'air entre une valeur seuil inférieure prédéterminée et une valeur seuil supérieure prédéterminée, soit par mouvement vertical de tuyaux d'entrée (6), soit par alimentation en eau ou évacuation d'eau vers ou depuis un récipient (4), et
dans laquelle les ouvertures des tuyaux d'entrée (6) sont agencées dans une direction verticale de sorte que le gaz guidé via les tuyaux d'entrée dans le récipient se voie attribuer une composante directionnelle horizontale de sorte que la masse d'eau pendant l'utilisation soit mise en mouvement et que le gaz et l'eau dans le récipient soient soigneusement mélangés.

2. Installation filtre selon la revendication 1, dans laquelle l'espace ouvert est de 92 % à 96 %, de manière davantage préférée est d'environ 94 %.

3. Installation filtre selon l'une quelconque des revendications précédentes, dans laquelle le tapis filtrant a une densité de 25 à 100 kg/m³, de préférence 35 à 95 kg/m³, de manière davantage préférée 45 à 90 kg/m³ et de manière préférée entre toutes 50 à 85 kg/m³ et/ou dans laquelle le tapis filtrant a une surface spécifique de 150 à 500 m²/m³, de préférence 165 à 360 m²/m³, et de manière préférée entre toutes 180 à 280 m²/m³.

4. Installation filtre selon l'une quelconque des revendications précédentes, dans laquelle une extrémité externe de la sortie (8) qui débouche dans le récipient (4) est située plus haut dans le récipient (4) qu'une extrémité externe de l'entrée (6) qui débouche dans le récipient (4).

5. Installation filtre selon l'une quelconque des revendications précédentes, dans laquelle une extrémité externe de la sortie (8) qui débouche dans le récipient (4) et/ou une extrémité externe de l'entrée (6) qui débouche dans le récipient (4) se présentent sous la forme de parties de tuyau sensiblement verticales.

6. Installation filtre selon l'une quelconque des revendications précédentes, dans laquelle le fond du récipient (4) est convexe, de sorte que les saletés dans l'eau dans le récipient s'accumulent le long du bord de fond.

7. Installation de filtre selon l'une quelconque des revendications précédentes, dans laquelle le récipient (4) est connecté via un conduit à une cuve de sonde pour lire le niveau d'eau (18) dans le récipient (4), dans laquelle un capteur est de préférence agencé dans la cuve de sonde dans le but de mesurer le niveau d'eau dans la cuve de sonde.

8. Installation filtre selon l'une quelconque des revendications précédentes, dans laquelle les moyens de déplacement d'air se présentent sous la forme d'un ventilateur centrifuge.

9. Installation filtre selon l'une quelconque des revendications précédentes, dans laquelle le dispositif de commande est connecté de manière fonctionnelle aux moyens de déplacement d'air et est configuré pour commander les moyens de déplacement d'air sur la base de la vitesse d'air mesurée par le premier capteur.

10. Logement pour animal comprenant une installation filtre selon l'une quelconque des revendications 1 à 9.

11. Utilisation d'une installation filtre selon les revendications 1 à 9 ou d'un logement pour animal selon la revendication 10, comprenant le remplissage partiel du récipient de l'installation filtre avec de l'eau, de sorte qu'une extrémité externe de l'entrée qui débouche dans le récipient soit située en dessous du niveau d'eau lorsque les moyens de déplacement d'air sont désactivés, tandis qu'une extrémité externe de la sortie qui débouche dans le récipient est située au-dessus du niveau d'eau.
